# EUROPEAN PATENT SPECIFICATION

(11) **EP 0 222 451 B1**
(45) Date of publication and mention of the grant of the patent: **20.01.1993**
(21) Application number: 86201941.1
(22) Date of filing: 07.11.1986
(51) Int. Cl.: A01B 29/04

(54) **An agricultural machine**
Landwirtschaftliche Geräte
Machine agricole

(30) Priority: 11.11.1985 NL 8503083
(43) Date of publication of application: 20.05.1987
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- AU-B- 23 969
- DE-A- 3 402 064
- GB-A- 2 145 913
- NL-A- 6 909 683

## Description

The invention relates to an agricultural machine comprising at least one roller having a plurality of members which extend substantially transverse to the axis of rotation of said roller and which are fitted by means of at least two tensile bars, whereby at least a plurality of the transverse members are clamped in position by means of spacer rings.

A suchlike implement is known from the GB-A-2,145,913 wherein cylindrical sleeves are fit against the opposite sides of a spacer ring. In the therein described construction the spacer rings are kept in their position by the transverse members. These members are therefore provided with special grooves to support the spacer rings. Although such a construction may be acceptable from constructional point of view, it needs much fabricating effort and it is therefore expensive. Furthermore, the spacer rings have to be made of a stiff type of iron, which should not be too thin.

It is the object of the underlying invention to come to a more simple, less weighing, and less expensive construction. Therefore, spacer rings are made of sheet steel and kept in position by tensile bars which are fitted through apertures in each of the transverse members, each of which spacer rings being fitted closely over the tensile bars, the inner surface of each spacer ring being at least partly in physical contact with all the tensile bars.

Using the construction according to the invention, it is now possible to provide for an agricultural machine of the above-defined type with a roller which has a significantly lower weight, whilst maintaining an adequate rigidity. By using this invention it is also achieved that the roller as a whole has such an elasticity that the reaction forces acting on the roller during operation, which forces may be considerable when also part of the machine's weight is carried thereby, can be effectively offset.

For a better understanding of the present invention and to show how the same may be carried into effect, reference will now be made, by way of example, to the accompanying drawings, in which:

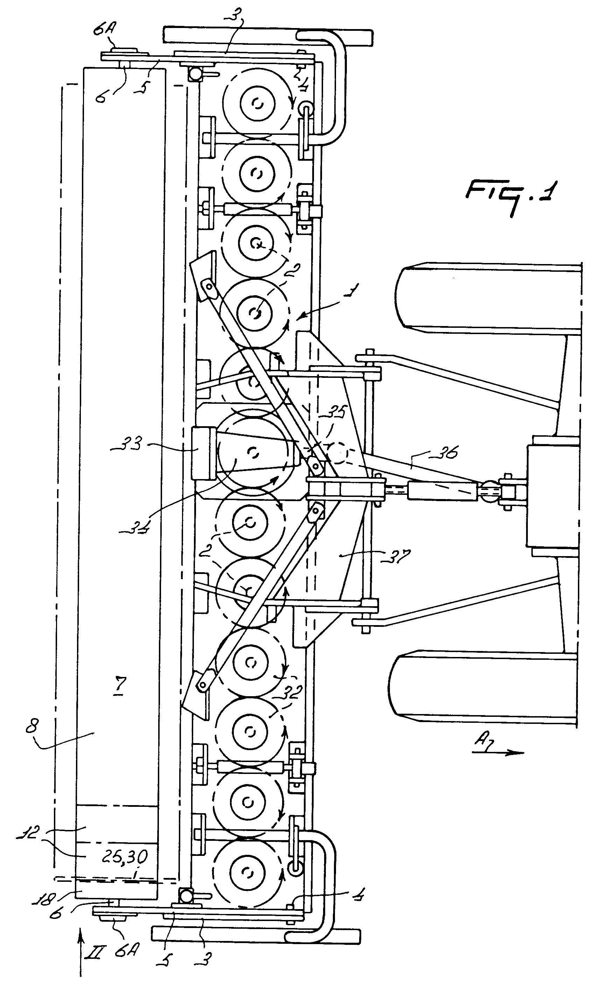

Figure 1 is a schematical plan view of an agricultural machine comprising a roller according to the invention, which agricultural machine is in particular suitable for the preparation of a seed bed;
Figure 2 is, to an enlarged scale, a view taken in the direction of the arrow II in Figure 1 of a first embodiment of a roller according to the invention;
Figure 3 is a view taken on the line III-III in Figure 2;
Figure 4 is, to an enlarged scale, a view taken in the direction of the arrow II in Figure 1 of a second embodiment of a roller according to the invention, and
Figure 5 is a view taken on the line V-V in Figure 4.

The agricultural machine shown in the drawings is a soil cultivating machine, in particular for the preparation of a seed bed.

The machine comprises a box-like frame portion 1 which extends transverse to the direction of operative travel A and in which, arranged equidistantly from each other, preferably at 25 cms, the upwardly directed, preferably at least substantially vertical, shafts 2 of the soil working structures are supported. Under the frame portion 1, the soil working structures each include a carrier which is provided on the shaft 2, extends in an at least substantially horizontal direction, and at its ends comprises downwardly extending soil working members.

The ends of the box-like frame portion 1 are closed by upwardly directed plates 3 which extend at least substantially parallel to the direction of operative travel A of the machine. Near the front, the plates 3 are each provided with a shaft 4 which extends transverse to the direction of operative travel A and about which arms 5, which extend rearwardly along the plates, are freely pivotally. The ends of the arms 5 support a roller 7 which is freely rotatable by means of shafts 6 and bearings, each accommodated in a bearing housing 6A. Near the rear of the plates 3 means are provided, in the present case a screw spindle, for height adjustment of the arms 5; the arrangement being such that with the aid of the roller 7 located behind the soil working structures and carrying at least part of the machine's weight, the working depth of the soil working members of the soil working structures can be set. In this embodiment the roller 7 is in the form of a packer roller, including a cylindrical portion 8 which carries spaced apart crowns 25, 30 of teeth.

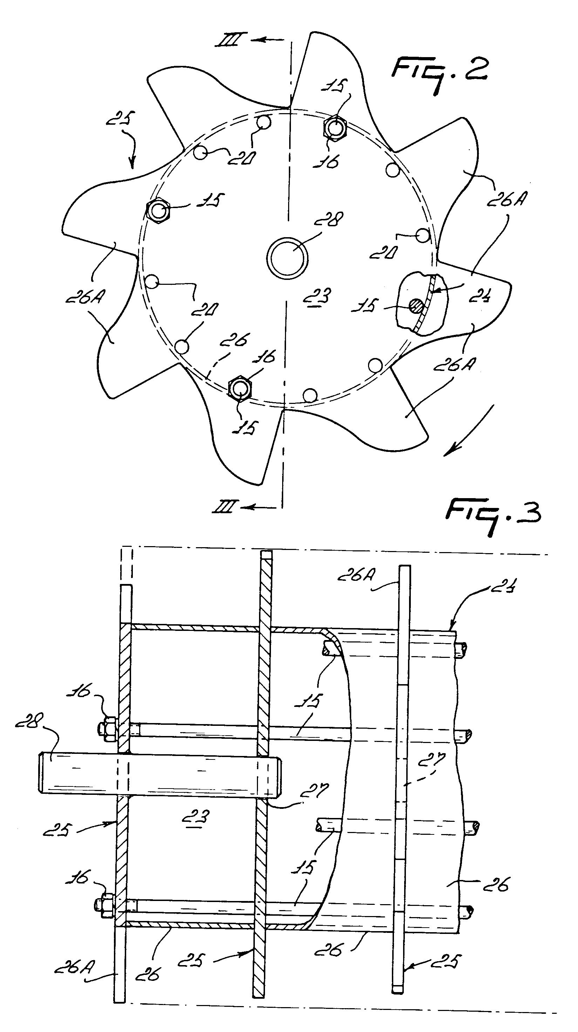

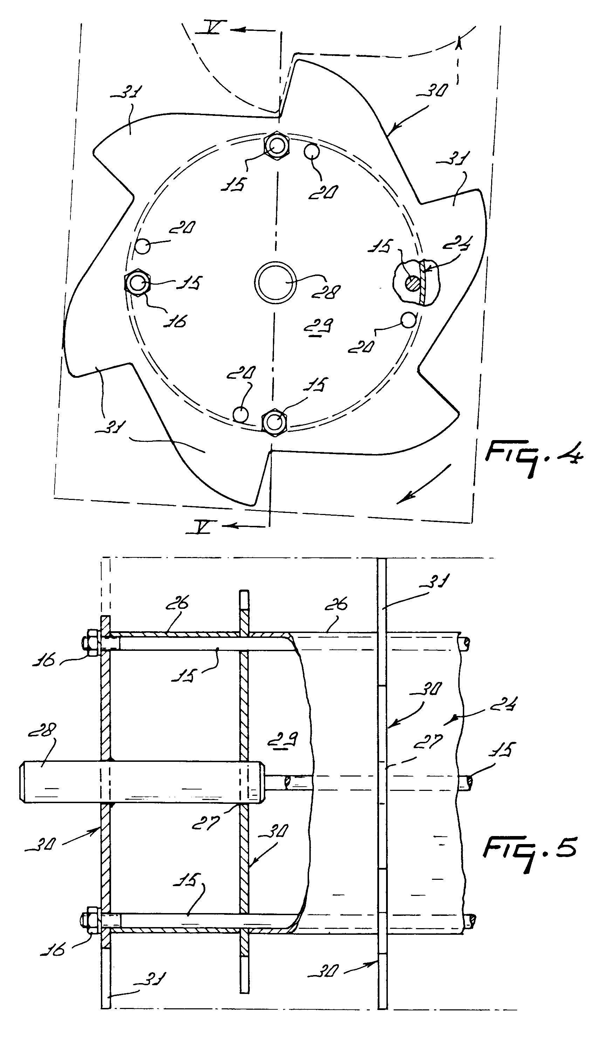

In the embodiment shown in Figures 2 and 3, the packer roller 23 has a cylindrical portion 24 formed by the rings 26. The rings 26 are arranged between the crowns of teeth 25 and are made of plate material. With the aid of the rings 26 the crowns of teeth are clamped.

In this embodiment the crowns of teeth 25 are made from plate material having a thickness of 8 to 10 mms. The crowns of teeth 25 have eight teeth 26A or teeth which are spaced apart at equal circumferential angles. Taken in the direction away from the cylindrical portion 24, each tooth has an at least substantially radial side which merges into an inwardly extending curved side which at its beginning is located at least substantially tangentially. The last-mentioned side reaches as far as the cylindrical portion 24 formed by the rings 26 (Figure 2). In this embodiment, the facing sides of the rings 26 are flat.

The plates constituting the crowns of teeth 25 extend to within the circumference of the cylindrical portion 24 formed by the rings 26, and have a central aperture 27. The diameter of the aperture 27 corresponds to the diameter of a shaft 28 disposed by means of two crowns of teeth at the ends of the roller (Figure 3). In this embodiment, the fixation of the crowns of teeth 25 and the rings 26 is effected by means of four tensile bars 15 and nuts 16. The tensile bars 15 are spaced apart at equal circumferential angles and bear against the inner side of the rings 26 (Figure 2). The nuts 16 co-operate with the outer side of a crown of teeth 26A, the said crown of teeth being disposed at the ends of the roller and also supporting the shaft 28.

In the embodiment of Figures 4 and 5, there is shown a packer roller which partly corresponds to the packer roller of Figures 2 and 3. The roller 29 has crowns of teeth 30, each of which has six teeth 31. These teeth also have an at least substantially radial side. However, here the curved side extends through a larger circumferential angle, which angle is approximately 60° (Figure 4).

In addition, the radial and the curved sides of the respective teeth 31 do not reach to as far as the cylindrical portion 24 of the roller, which portion is formed by the plate material rings 26.

In this embodiment, the clamping is effected in the same manner as in the preceding embodiment. However, here only two apertures 20 are provided for each tensile bar 15, said apertures being interspaced at a circumferential angle of approximately 30°. With the aid of the apertures 20 consecutive crowns 30 of teeth can be disposed in the same manner as the crowns of teeth 9 in the first embodiment.

Within the frame portion 1 the shafts 2 are provided with a pinion 32, the arrangement being such that the pinions 32 on the shafts of adjacent soil working members are in driving connection with each other. The extension of the shaft 2 of a soil working member located near the centre is in driving connection via a speed variator 33 with a shaft 35 in a gear box 34, which shaft via an intermediate shaft 36 is drivable from the power take-off shaft of a tractor for rotating the soil working members in opposite sense, said members cultivating at least adjoining strips of soil. For the purpose of coupling the machine to a tractor, the frame portion 1 has a trestle 37 with a three-point hitch.

Using the construction according to the invention described with reference to the respective embodiments, a packer roller can be provided which is assembled from a plurality of prefabricated parts. These parts, i.e. the crowns of teeth constituting the disc-shaped members which extend transverse to the axis of rotation of the roller, and the rings can be clamped together during manufacturing in a fast and effective manner, so that the assemblage of the packer roller in any width can be effected rapidly and cheaply, whilst, because of the use of plate material, the total overall weight of the roller, compared to that of the prior art rollers comprising cast parts, is significantly less. The use of the rings, which are disposed between the crowns of teeth and are made of sheet steel, renders it furthermore possible to increase the relative elasticity of the packer roller, as a result of which, in particular when used in machines having a large working width, it has a greater resistance against overloading.

The roller as a whole has an increased resistance against deformation. This effect is enhanced by the provision of the tensile bars 15, as in both embodiments, said tensile bars being located against the inner side of the rings.

## Claims

1. An agricultural machine comprising at least one roller (7, 23, 29) having a plurality of members (25, 30) which extend substantially transverse to the axis of rotation of said roller and which are fitted by means of at least two tensile bars (15), whereby at least a plurality of the transverse members (25, 30) are clamped in position by means of spacer rings (12, 26), characterized in that the spacer rings (12, 26) are made of sheet steel and kept in position by tensile bars (15) which are fitted through apertures in each of the transverse members (25, 30), each of which spacer rings (12, 26) being fitted closely over the tensile bars, the inner surface of each spacer ring (12, 26) being at least partly in physical contact with all the tensile bars (15).

2. An agricultural machine as claimed in claim 1, characterized in that the diameter of the spacer rings (12, 26) is such that their periphery touches the transverse members (25, 30) in an area which falls inside but ajacent to the periphery of a circle drawn through the bases of a set of teeth (26 A, 31) formed in the periphery of said transverse members (25, 30).

3. An agricultural machine as claimed in claim 1 or 2, characterized in that within the periphery of the spacer rings (12, 26) the transverse members (25, 30) each are provided with at least two apertures, through each of which a tensile bar (15) is passed.

4. An agricultural machine as claimed in claim 1, 2 or 3, characterized in that four tensile bars (15) are provided, each transverse member (25, 30) being provided with four apertures, through each of which a tensile bar (15) is passed.

## Patentansprüche

1. Landmaschine mit mindestens einer Walze (7, 23 29), die mehrere Glieder (25, 30) aufweist, welche im wesentlichen quer zur Drehachse der Walze ausgerichtet und mit mindestens zwei Zugstangen (15) befestigt sind, wobei mindestens einige der Querglieder (25, 30) mittels Distanzringen (12, 26) in ihrer Lage verspannt sind, dadurch gekennzeichnet, daß die Distanzringe (12, 26) aus Stahlblech hergestellt und in ihrer Lage mittels Zugstangen (15) gehalten werden, welche durch Ausnehmungen in jedem der Querglieder (25, 30) hindurchgeführt sind, wobei jeder Distanzring (12, 26) über den Zugstangen dicht benachbart zu ihnen angebracht ist, und wobei die Innenfläche jedes Distanzringes (12, 26) mindestens teilweise in Berührung mit allen Zugstangen (15) steht.

2. Landmaschine nach Anspruch 1, dadurch gekennzeichnet, daß der Durchmesser der Distanzringe (12, 26) derart bemessen ist, daß deren Peripherie die Querglieder (25, 30) in einem Bereich berührt, der innerhalb, aber nahe einer Kreislinie liegt, die durch die Fußteile eines Satzes von Zähnen (26 A, 31) gezogen ist, welche am Umfang der Querglieder (25, 30) ausgebildet sind.

3. Landmaschine nach einem der Ansprüche 1 oder 2, dadurch gekennzeichnet, daß die Querglieder (25, 30) innerhalb des Umfanges der Dinstanzringe (12, 26) jeweils mindestens zwei Ausnehmungen aufweisen, die jeweils von einer Zugstange (15) durchsetzt sind.

4. Landmaschine nach einem der Ansprüche 1, 2 oder 3, dadurch gekennzeichnet, daß vier Zugstangen (15) vorgesehen sind, daß jedes Querglied (25, 30) vier Ausnehmungen aufweist, und daß durch jede der Ausnehmungen eine Zugstange (15) hindurchgeführt ist.

## Revendications

1. Machine agricole comportant au moins un rouleau (7, 23, 29) muni d'une pluralité d'organes transversaux (25, 30) qui sont sensiblement perpendiculaires à l'axe de rotation dudit rouleau et qui sont assemblés par au moins deux barres de traction (15) aux moyens desquelles au moins un certain nombre desdits organes transversaux (25, 30) sont bloqués en position par l'intermédiaire de bagues d'espacement (12, 26), caractérisée par le fait que les bagues d'espacement sont faites d'acier en feuille et maintenues en positon par les barres de traction (15) qui sont disposées de façon à passer au travers d'orifices ménagés dans chacun des organes transversaux (25, 30), chacune des bagues d'espacement étant mise en place sur les barres de traction, la paroi interne de chaque bague d'espacement (12, 26) étant au moins partiellement en contact avec toutes les barres de traction.

2. Machine agricole selon la revendication 1, caractérisée en ce que le diamètre interne des bagues d'espacement (12, 26) est tel que leur périphérie est en contact avec les organes transversaux (25, 30) dans une zone qui est à l'intérieur mais adjacente à la périphérie d'un cercle passant par les bases des dents (26A, 31) disposées à la périphérie desdits organes transversaux.

3. Machine agricole selon la revendication 1 ou 2, caractérisée en ce que les organes transversaux (25, 30) sont chacun munis d'au moins deux orifices, situés à l'intérieur de la périphérie des bagues d'espacement, à travers chacun desquels passe une barre de traction (15).

4. Machine agricole selon l'une quelconque des revendications 1, 2 ou 3, caractérisée en ce qu'elle comporte quatre barres de traction (15), chaque organe transversal étant muni de quatre orifices, traversé chacun par une barre de traction (15).
